# EUROPÄISCHE PATENTSCHRIFT

(11) **EP 0 828 641 B1**
(45) Veröffentlichungstag und Bekanntmachung des Hinweises auf die Patenterteilung: **04.08.1999**
(21) Anmeldenummer: 96917453.1
(22) Anmeldetag: 23.05.1996
(51) Int. Cl.: B60T 13/72

(54) **BREMSKRAFTVERSTÄRKER**
BRAKE SERVO DEVICE FOR MOTOR VEHICLES
SERVOFREIN POUR VEHICULES AUTOMOBILES

(30) Priorität: 24.05.1995 DE 19518716
(43) Veröffentlichungstag der Anmeldung: 18.03.1998
(73) Patentinhaber: Continental Teves AG & Co. oHG, 60488 Frankfurt (DE)
(72) Erfinder: KLESEN, Christof, 64397 Modautal (DE); VOGT, Michael, D-55469 Simmern (DE)
(86) Internationale Anmeldenummer: EP9602290
(87) Internationale Veröffentlichungsnummer: WO9637393

(56) Entgegenhaltungen:
- EP-A- 0 696 534
- DE-C- 4 405 092

## Beschreibung

Die Erfindung betrifft einen Bremskraftverstärker für Kraftfahrzeuge mit einem Verstärkergehäuse, dessen Innenraum durch eine bewegliche Wand in eine erste Kammer (Unterdruckkammer) und eine zweite Kammer (Arbeitskammer) unterteilt ist, sowie mit einem eine auf die bewegliche Wand einwirkende pneumatische Druckdifferenz steuernden Steuerventil, das mindestens zwei mit einem elastischen Ventilkörper zusammenwirkende Dichtsitze aufweist, und einerseits durch eine Betätigungsstange und andererseits unabhängig von der Betätigungsstange durch einen Elektromagneten betätigbar ist, dessen Anker kraftübertragend mit einem der Dichtsitze zusammenwirkt.

Ein derartiger Bremskraftverstärker ist z.B. aus der internationalen Patentanmeldung WO 94/11226 bekannt. Weniger vorteilhaft anzusehen ist bei dem vorbekannten Bremskraftverstärker der insbesondere bei Einströmen der Außenluft in die Arbeitskammer auftretende Krafteinbruch der Kraft-Weg-Kennlinie der Steuerventils, der zu Instabilitäten führt. Um den Verlauf der Kraftkennlinie des Elektromagneten an die erwähnte Verbraucherkennlinie anzupassen ist ein hochdynamisches und präzises, aufwendiges Regelsystem erforderlich, daß Informationen über den Betätigungsweg einer den durch den Elektromagneten betätigbaren Dichtsitz tragenden Hülse benötigt. Zu diesem Zweck muß eine aufwendige Sensorik verwendet werden.

Es ist daher Aufgabe der vorliegenden Erfindung, Maßnahmen vorzuschlagen, die ein Eliminieren der Sensorik bei gleichzeitiger Vereinfachung des Regelsystems ermöglichen. Insbesondere sollen instabile Verbraucherpunkte angefahren werden.

Diese Aufgabe wird erfindungsgemäß dadurch gelöst, daß der Anker aus zwei relativ zueinander bewegbaren Teilen besteht, die mit im Gehäuse des Elektromagneten in dessen Betätigungsrichtung axial versetzt ausgebildeten Anschlägen zusammenwirken.

Zur Konkretisierung des Erfindungsgedankens sieht eine vorteilhafte Weiterbildung der Erfindung vor, daß der Anker durch zwei koaxial zueinander angeordnete teleskopartig ineinander geführte zylindrische Teile gebildet ist, wobei der Abstand zwischen dem radial außen angeordneten Teil und dem ihm zugeordneten Anschlag kleiner ist als der Abstand zwischen dem radial innen angeordneten Teil und dem ihm zugeordneten Anschlag.

Um die zwischen den beiden Ankerteilen auftretende Reibung zu minimieren und des Magnetflußverlauf zu optimieren, ist es sinnvoll, wenn zwischen den beiden Teilen eine isolierende Gleitschicht, beispielsweise eine Folie, angeordnet ist.

Der durch den Anker betätigbare Dichtsitz des Steuerventils kann dabei vorzugsweise entweder derjenige Dichtsitz sein, dessen Öffnen ein Belüften der zweiten Kammer (Arbeitskammer) ermöglicht, oder ein zu den Dichtsitzen konzentrisch angeordneter dritter Dichtsitz, der bei einer Betätigung des Steuerventils durch den Elektromagneten den Dichtsitz funktionsmäßig ersetzt, dessen Öffnen eine pneumatische Verbindung zwischen den beiden Kammern ermöglicht.

Weitere vorteilhafte Ausgestaltungen der Erfindung sind den Unteransprüchen 6 bis 8 entnehmbar.

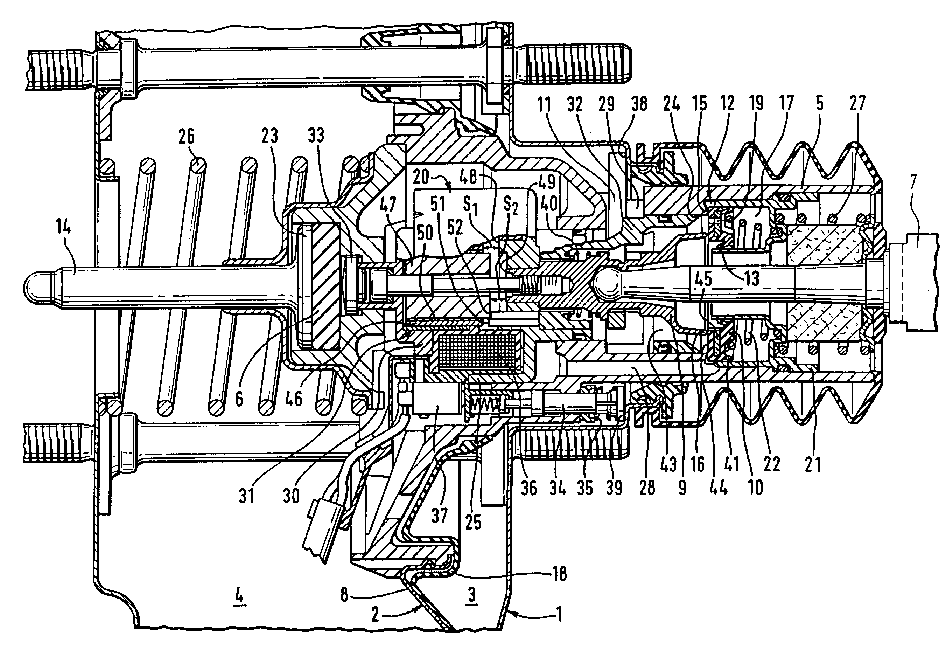

Die Erfindung wird in der nachfolgenden Beschreibung an einem Ausführungsbeispiel im Zusammenhang mit der beiliegenden Zeichnung näher erläutert. Die einzige Figur der Zeichnung zeigt eine Ausführung des erfindungsgemäßen Bremskraftverstärkers im Längsschnitt, teilweise weggebrochen.

Das lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem aus Blech tiefgezogenen Membranteller 8 und einer daran anliegenden flexiblen Membran 18, die nicht näher dargestellt zwischen dem äußeren Umfang des Membrantellers 8 und dem Verstärkergehäuse 1 eine Rollmembran als Abdichtung bildet.

Ein durch eine Betätigungsstange 7 betätigbares Steuerventil 12 ist in einem im Verstärkergehäuse 1 abgedichtet geführten, die bewegliche Wand 2 tragenden Steuergehäuse 5 untergebracht und besteht aus einem am Steuergehäuse 5 ausgebildeten ersten Dichtsitz 15, einem an einem mit der Betätigungsstange 7 verbundenen Ventilkolben 9 ausgebildeten zweiten Dichtsitz 16 sowie einem mit beiden Dichtsitzen 15,16 zusammenwirkenden, in einem im Steuergehäuse 5 abgedichtet angeordneten Führungsteil 21 geführten, ringförmigen Ventilkörper 10, der mittels einer sich am Führungsteil 21 abstützenden Ventilfeder 22 gegen die Ventilsitze 15,16 gedrückt wird. Die Arbeitskammer 3 ist mit der Unterdruckkammer 4 über einen seitlich im Steuergehäuse 5 verlaufenden Kanal 28 verbindbar.

Die Bremskraft wird über eine stirnseitig am Steuergehäuse 5 anliegende gummielastische Reaktionsscheibe 6 sowie eine einen Kopfflansch 23 aufweisende Druckstange 14 auf einen Betätigungskolben eines nicht dargestellten Hauptzylinders der Bremsanlage übertragen, der an der unterdruckseitigen Verstärkergehäusehälfte angebracht ist.

Eine in der Zeichnung schematisch dargestellte Rückstellfeder 26, die sich an der unterdruckseitigen Stirnwand des Verstärkergehäuses 1 abstützt, hält die bewegliche Wand 2 in der gezeigten Ausgangsstellung. Außerdem ist eine zweite Druckfeder bzw. Kolbenstangenrückholfeder 27 vorgesehene, die einerseits indirekt an der Betätigungsstange 7 und andererseits am Führungsteil 21 abgestützt ist und deren Kraft für eine Vorspannung des Ventilkolbens 9 bzw. seines Dichtsitzes 16 gegenüber dem Ventilkörper 10 sorgt.

Um die Arbeitskammer 3 bei der Betätigung des Steuerventils 12 mit der Atmosphäre verbinden zu können, ist schließlich im Steuergehäuse 5 ein annähernd radial verlaufender Kanal 29 ausgebildet. Die Rückkehrbewegung des Ventilkolbens 9 am Ende eines Bremsvorganges wird dabei durch ein Querglied 11 begrenzt, das in der in der Zeichnung gezeigten Lösestellung des Unterdruckbremskraftverstärkers an einem im Verstärkergehäuse 1 ausgebildeten Anschlag 38 anliegt.

Wie der Zeichnung weiter zu entnehmen ist, weist der Ventilkörper 10 eine mit den beiden Dichtsitzen 15,16 zusammenwirkende ringförmige Dichtfläche 44 auf, die mittels einer metallischen Versteifungsscheibe 45 versteift ist und mit mehreren axialen Durchlässen 19 versehen ist. Außerdem weist der Ventilkörper 10 eine radial innen ausgebildete Dichtlippe 13 sowie eine radial außen ausgebildete zweite Dichtlippe 41 auf, die im montierten Zustand des Ventilkörpers 10 im Steuergehäuse 5 an dem vorhin erwähnten, den Ventilkörper 10 führenden Führungsteil 21 dichtend anliegen, so daß im Steuergehäuse 5 ein pneumatischer Raum 17 begrenzt ist. Die durch die Durchlässe 19 und Öffnungen in der Dichtfläche 44 gebildeten, näher nicht bezeichneten Strömungskanäle verbinden den pneumatischen Raum 17 mit einem durch die Dichtsitze 15,16 begrenzten Ringraum 43, in dem der oben erwähnte pneumatische Kanal 29 mündet, so daß der auf der der Dichtfläche 44 abgewandten Seite des Ventilkörpers 10 ausgebildete pneumatische Raum 17 ständig mit der Arbeitskammer 3 in Verbindung steht und am Ventilkörper 10 ein Druckausgleich stattfindet.

Die beschriebene Anordnung ermöglicht demnach eine Verringerung der Differenz zwischen der Ansprechkraft des Bremskraftverstärkers und der am Ventilkolben wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist, wodurch eine Verbesserung der Hysterese des erfindungsgemäßen Bremskraftverstärkers erreicht wird.

Um eine von der Betätigungsstange 7 unabhängige Fremdbetätigung des erfindungsgemäßen Bremskraftverstärkers einzuleiten ist radial zwischen dem ersten (15) und dem zweiten Dichtsitz 16 ein dritter Dichtsitz 24 vorgesehen, der mittels eines Elektromagneten 20 betätigbar ist, der vorzugsweise in einem mit dem Ventilkolben 9 fest verbundenen Gehäuse 25 angeordnet ist und demnach zusammen mit dem Ventilkolben 9 im Steuergehäuse 5 verschiebbar ist. Der Elektromagnet 20 besteht aus einer innerhalb des Gehäuses 25 angeordneten Spule 36 sowie einem axial verschiebbar angeordneten zylindrischen Anker 31, der teilweise in einem das Gehäuse 25 verschließenden Verschlußteil 30 geführt wird und an dem sich eine Hülse 32 abstützt, die den vorhin erwähnten dritten Dichtsitz 24 trägt .Der Anker 12 besteht dabei aus zwei koaxial zueinander angeordnete teleskopartig ineinander geführten Teilen 46,47, zwischen denen eine Folie 50 angeordnete ist. Dem radial außen angeordneten Ankerteil 46, dessen axiale Baulänge kleiner ist als die des innen angeordnete Ankerteils 47, ist im Gehäuse 25 des Elektromagneten 20 ein Anschlag 48 zugeordnet, während der innen angeordnete Ankerteil 47 mit einem zweiten Anschlag 49 in Eingriff bringbar ist. Die Anordnung der beiden Anschläge 48,49 ist dabei vorzusgweise derart getroffen, daß der Betätigungsweg S₁ des radial äußeren Ankerteils 46 kürzer ist als der Betätigungsweg S₂ des radial inneren Ankerteils 47. Beide Ankerteile 46,47 wirken mit an der Hülse 32 axial versetzt ausgebildeten Anschlagflächen 51,52 zusammen.

Zwischen dem Ventilkolben 9 und der Hülse 32 ist eine Druckfeder 40 angeordnet, die die Hülse 32 entgegen ihrer Betätigungsrichtung vorspannt, so daß der dritte Dichtsitz 24 gegenüber dem am Ventilkolben 9 ausgebildeten zweiten Dichtsitz 16 axial versetzt angeordnet ist. Das im Steuergehäuse 5 geführte Verschlußteil 30 liegt unter Zwischenschaltung einer Übersetzungsscheibe 33 an der vorhin erwähnten Reaktionsscheibe 6 an und ermöglicht eine Übertragung der an der Betätigungsstange 7 eingeleiteten Eingangskraft auf die Reaktionsscheibe 6.

Bei der in der Zeichnung gezeigten Ausführung des erfindungsgemäßen Bremskraftverstärkers sind schließlich elektrische Schaltmittel 37,38 vorgesehen, die insbesondere bei Bremsvorgängen wichtig sind, bei denen zusätzlich zur Fahrerbetätigung der Elektromagnet 20 angesteuert wird, um unabhängig vom Fahrerwillen eine Vollbremsung herbeizuführen (sog. Bremsassistentfunktion). Dabei ist von besonderer Bedeutung, daß die Schaltmittel 37,38 bei jeder Bremsung betätigt werden. Gleichzeitig muß gewährleistet werden, daß der Elektromagnet 20 nach Beendigung des fremdkraftunterstützten Bremsvorganges sicher abgeschaltet wird. Die gezeigten Schaltmittel bestehen dabei aus einem vorzugsweise am Ventilkolben 9 bzw. dem Gehäuse 25 des Elektromagneten 20 befestigten, zwei Schaltstellungen aufweisenden Mikroschalter 37 sowie einem den Mikroschalter 37 durch eine translatorische Bewegung betätigenden Betätigungselement 34, das in einer im Steuergehäuse 5 vorgesehenen Bohrung abgedichtet geführt ist und mit einem verstärkergehäusefesten Anschlag zusammenwirkt, der das Bezugszeichen 39 trägt und beispielsweise durch einen radialen Kragen der hinteren Verstärkergehäushälfte gebildet sein kann. Zwischen dem Betätigungselement 34 und dem Steuergehäuse 5 ist eine Druckfeder 35 angeordnet, so daß das dem Mikroschalter 37 abgewandte Ende des Betätigungselements 34 unter einer Vorspannung am Anschlag 39 anliegt.

Bei einer Fremdbetätigung des Bremskraftverstärkers, bei der die Spule 36 des Elektromagneten 20 bestromt wird, setzt sich sowohl der äußere (46) als auch der innere Ankerteil 47 in Bewegung. Setzt der äußere Ankerteil 46 auf die Anschlagfläche 51 der Kraftübertragungshülse 32 auf, so wird die Bewegung durch die Gegenkraft der Druckfeder 40 gebremst. Ist die vom Elektromagneten 20 aufgebrachte Kraft größer als die Gegenkraft, so beginnt die Kraftübertragungshülse 32 sich nach rechts zu bewegen. Der innere Ankerteil 47 liefert dabei lediglich einen sehr geringen Kraftanteil, da sein Luftspalt bzw. der Abstand S₂ zu seinem Anschlag 49 noch sehr groß ist. Hat der äußere Ankerteil 46 den Weg S₁ zurückgelegt, so kommt er zur Anlage am Anschlag 48 im Gehäuse 25.

Ist der dem Elektromagneten 20 zugeführte Strom ausreichend groß, um den äußeren Ankerteil 46 in die magnetische Sättigung zu bringen, so beginnt der innere Ankerteil 47 zu wirken, so daß die Kraftübertragungshülse 32 weiter nach rechts bewegt werden kann, bis der innere Ankerteil 47 ebenfalls zur Anlage am Anschlag 49 kommt.

Mit dem über den Betätigungsweg S₁ des äußeren Ankerteiles 46 eingestellten Anschlag 48 kann somit ein Punkt der Verbraucherkennlinie angefahren werden, der einer definierten Öffnung des Steuerventils entspricht. Bei dem in der Zeichnung gezeigten Ausführungsbeispiel steigt der im nicht gezeigten Hauptzylinder sich aufbauende Druck bis zu einem vom Strom bestimmten Wert an. Gleichzeitig nimmt die Gegenkraft des Steuerventils durch die veränderten pneumatischen Druckverhältnisse zu und das Steuerventil wird wieder geschlossen.

### Bezugszeichenliste:

- 1: Verstärkergehäuse
- 2: bewegliche Wand
- 3: Arbeitskammer
- 4: Unterdruckkammer
- 5: Steuergehäuse
- 6: Reaktionsscheibe
- 7: Betätigungsstange
- 8: Membranteller
- 9: Ventilkolben
- 10: Ventilkörper
- 12: Querglied
- 12: Steuerventil
- 13: Dichtlippe
- 14: Druckstange
- 15: Dichtsitz
- 16: Dichtsitz
- 17: Raum
- 18: Rollmembran
- 19: Durchlaß
- 20: Elektromagnet
- 21: Führungsteil
- 22: Ventilfeder
- 23: Kopfflansch
- 24: Dichtsitz
- 25: Gehäuse
- 26: Rückstellfeder
- 27: Kolbenstangenrückholfeder
- 28: Kanal
- 29: Kanal
- 30: Verschlußteil
- 31: Anker
- 32: Hülse
- 33: Übersetzungsscheibe
- 34: Betätigungselement
- 35: Feder
- 36: Spule
- 37: Mikroschalter
- 38: Anschlag
- 39: Anschlag
- 40: Feder
- 41:
- 42:
- 43: Ringraum
- 44: Dichtfläche
- 45: Versteifungsscheibe
- 46: Teil
- 47: Teil
- 48: Anschlag
- 49: Anschlag
- 50: Gleitschicht, Folie
- 51: Anschlagfläche
- 52: Anschlagfläche

## Patentansprüche

1. Pneumatischer Bremskraftverstärker für Kraftfahrzeuge mit einem Verstärkergehäuse (1), dessen Innenraum durch eine bewegliche Wand in eine erste Kammer (4) und eine zweite Kammer (3) unterteilt ist, sowie mit einem eine auf die bewegliche Wand (2) einwirkende pneumatische Druckdifferenz steuernden Steuerventil (12), das mindestens zwei mit einem elastischen Ventilkörper (10) zusammenwirkende Dichtsitze (15,16) aufweist, und einerseits durch eine Betätigungsstange (7) und andererseits unabhängig von der Betätigungsstang (7) durch einen Elektromagneten (20) betätigbar ist, dessen Anker (31) kraftübertragend mit einem der Dichtsitze (15,16) zusammenwirkt, dadurch **gekennzeichnet,** daß der Anker (31) aus zwei relativ zueinander bewegbaren Teilen (46,47) besteht, die mit im Gehäuse (25) des Elektromagneten (20) in dessen Betätigungsrichtung axial versetzt ausgebildeten Anschlägen (48,49) zusammenwirken.

2. Bremskraftverstärker noch Anspruch 1, dadurch **gekennzeichnet,** daß der Anker (31) durch zwei koaxial zueinander angeordnete, teleskopartig ineinander geführte zylindrische Teile (46,47) gebildet ist, wobei der Abstand zwischen dem radial außen angeordneten Teil (46) und dem ihm zugeordneten Anschlag (48) kleiner ist als der Abstand zwischen dem radial innen angeordneten Teil (47) und dem ihm zugeordneten Anschlag (49).

3. Bremskraftverstärker nach Anspruch 2, dadurch **gekennzeichnet,** daß zwischen den beiden Teilen (46,47) eine Gleitschicht (50), beispielsweise eine Folie, angeordnet ist.

4. Bremskraftverstärker nach einem der Ansprüche 1 bis 3, dadurch **gekennzeichnet,** daß der durch den Anker betätigbare Dichtsitz derjenige ist, dessen Öffnen ein Belüften der zweiten Kammer (Arbeitskammer) ermöglicht.

5. Bremskraftverstärker nach einem der Ansprüche 1 bis 3, dadurch **gekennzeichnet,** daß der durch den Anker (31) betätigbare Dichtsitz ein zu den Dichtsitzen (15,16) konzentrisch angeordneter dritter Dichtsitz (24) ist, der bei einer Betätigung des Steuerventils (12) durch den Elektromagneten (20) den Dichtsitz (15) funktionsmäßig ersetzt, dessen Öffnen eine pneumatische Verbindung zwischen den beiden Kammern (3,4) ermöglicht.

6. Bremskraftverstärker nach Anspruch 5, dadurch **gekennzeichnet,** daß der dritte Dichtsitz (24) an einer durch den Anker (31) verschiebbaren Kraftübertragungshülse (32) ausgebildet ist, deren mit dem radial äußeren bzw. dem radial inneren Teil (46) bzw. (47) des Ankers (31) zusammenwirkende Anschlagflächen (51,52) in der Betätigungsrichtung der Kraftübertragungshülse (32) axial versetzt ausgebildet sind.

7. Bremskraftverstärker nach einem der vorhergehenden Ansprüche, dadurch **gekennzeichnet,** daß die beiden Teile (46,47) des Ankers (31) eine unterschiedliche Länge aufweisen.

8. Bremskraftverstärker nach Anspruch 7, dadurch **gekennzeichnet,** daß die axiale Baulänge des radial inneren Ankerteiles (46) größer ist als die des radial äußeren Ankerteiles (47).

## Claims

1. Pneumatic brake power booster for automotive vehicles including a booster housing (1) having its interior subdivided by a movable wall into a first chamber (4) and a second chamber (3), and a control valve (12) which controls a pneumatic pressure differential that acts upon the movable wall (2), the control valve having at least two sealing seats (15, 16), which interact with an elastic valve member (10), and being operable by an actuating rod (7), on the one hand, and by a solenoid (20) irrespective of the actuating rod (7), on the other hand, the armature (31) of the solenoid being in a force-transmitting cooperation with one of the sealing seats (15, 16),
**characterized** in that the armature (31) includes two parts (46, 47) movable relative to each other which interact with stops (48, 49) that are axially offset in the housing (25) of the solenoid (20) in the latter's actuating direction.

2. Brake power booster as claimed in claim 1,
**characterized** in that the armature (31) is comprised of two cylindrical parts (46, 47) which are coaxial to each other and guided telescopically in each other, and the distance between the radially outwardly arranged part (46) and its associated stop (48) is smaller than the distance between the radially inwardly arranged part (47) and its associated stop (49).

3. Brake power booster as claimed in claim 2,
**characterized** in that a sliding layer (50), e.g., a foil, is interposed between the two parts (46, 47).

4. Brake power booster as claimed in any one of claims 1 to 3,
**characterized** in that the sealing seat operable by the armature is that sealing seat which, when opened, permits ventilation of the second chamber (working chamber).

5. Brake power booster as claimed in any one of claims 1 to 3,
**characterized** in that the sealing seat operable by the armature (31) is a third sealing seat (24) which is arranged concentrically to the sealing seats (15, 16) and, upon operation of the control valve (12) by the solenoid (20), replaces the sealing seat (15) in terms of function which, when opened, permits a pneumatic connection between the two chambers (3, 4).

6. Brake power booster as claimed in claim 5,
**characterized** in that the third sealing seat (24) is provided on a force-transmitting sleeve (32) displaceable by the armature (31), the stop surfaces (51, 52) on the sleeve (32) which interact with the radially outward or the radially inward part (46) or (47) of the armature (31) being axially offset in the actuating direction of the force-transmitting sleeve (32).

7. Brake power booster as claimed in any one of the preceding claims,
**characterized** in that the two parts (46, 47) of the armature (31) differ in length.

8. Brake power booster as claimed in claim 7,
**characterized** in that the overall axial length of the radially inward armature part (47) is in excess of the length of the radially outward armature part (46).

## Revendications

1. Amplificateur pneumatique d'effort de freinage pour véhicules automobiles, comprenant un boîtier d'amplificateur (1) dont l'espace intérieur est divisé, par une paroi mobile, en une première chambre (4) et une seconde chambre (3), ainsi qu'une valve de commande (12) réglant une pression différentielle pneumatique qui agit sur la paroi mobile (2), la valve comprenant au moins deux sièges d'étanchéité (15, 16) coopérant avec un corps obturateur élastique (10), et pouvant être actionnée d'un côté par l'intermédiaire d'une tige de commande (7) et d'un autre côté, indépendamment de la tige de commande (7), par un électro-aimant (20) dont l'induit (31) coopère avec l'un des sièges d'étanchéité (15, 16) en transmettant les forces,
caractérisé en ce que l'induit (31) se compose de deux éléments (46, 47) mobiles l'un par rapport à l'autre, qui coopèrent avec des butées (48, 49) aménagées dans le boîtier (25) de l'électroaimant (20), de façon axialement décalée dans le sens de l'actionnement de celui-ci.

2. Amplificateur d'effort de freinage selon la revendication 1, caractérisé en ce que l'induit (31) est constitué de deux éléments cylindriques (46, 47) disposés coaxialement et guidés de façon télescopique l'un dans l'autre, la distance entre l'élément (46) disposé radialement à l'extérieur et la butée (48) qui lui est associée étant inférieure à la distance entre l'élément (47) disposé radialement à l'intérieur et la butée (49) qui lui est associée.

3. Amplificateur d'effort de freinage selon la revendication 2, caractérisé en ce qu'une couche de glissement (50), par exemple un film, est disposé(e) entre les deux éléments (46, 47).

4. Amplificateur d'effort de freinage selon l'une des revendications 1 à 3, caractérisé en ce que le siège d'étanchéité pouvant être actionné par l'intermédiaire de l'induit est celui dont l'ouverture permet une ventilation de la deuxième chambre (la chambre de travail).

5. Amplificateur d'effort de freinage selon l'une des revendications 1 à 3, caractérisé en ce que le siège d'étanchéité pouvant être actionné par l'induit (31) est un troisième siège d'étanchéité (24) disposé concentriquement aux deux autres sièges d'étanchéité (15, 16), ce siège remplaçant fonctionnellement, le siège d'étanchéité (15) lors d'un actionnement de la valve de commande (12) par l'électro-aimant (20), le siège d'étanchéité (15) dont l'ouverture permet l'établissement d'une communication pneumatique entre les deux chambres (3, 4).

6. Amplificateur d'effort de freinage selon la revendication 5, caractérisé en ce que le troisième siège d'étanchéité (24) est aménagé sur une douille de transmission des forces (32) pouvant être déplacée au moyen de l'induit (31), les faces de butée (51, 52) de la douille qui coopèrent avec les éléments radialement extérieur (46) et radialement intérieur (47) de l'induit (31), étant agencées de façon axialement décalée dans le sens de l'actionnement de la douille de transmission des forces (32).

7. Amplificateur d'effort de freinage selon l'une des revendications précédentes, caractérisé en ce que les deux éléments (46, 47) de l'induit (31) présentent des longueurs différentes.

8. Amplificateur d'effort de freinage selon la revendication 7, caractérisé en ce que l'encombrement axial de l'élément d'induit radialement intérieur (47) est supérieur à celui de l'élément d'induit radialement extérieur (46).
